(19) Europäisches Patentamt / European Patent Office / Office européen des brevets

(11) **EP 4 329 149 A1**

(12) **EUROPEAN PATENT APPLICATION**

(43) Date of publication:
**28.02.2024 Bulletin 2024/09**

(21) Application number: **22192477.2**

(22) Date of filing: **26.08.2022**

(51) International Patent Classification (IPC):
**H02J 13/00** (2006.01)   **H02J 3/00** (2006.01)

(52) Cooperative Patent Classification (CPC):
**H02J 13/00004; H02J 3/001;** H02J 3/32;
H02J 2203/20

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(71) Applicants:
- **Rolls-Royce Solutions Augsburg GmbH**
  **86165 Augsburg (DE)**
- **Rolls-Royce plc**
  **London SW1E 6AT (GB)**

(72) Inventors:
- **Kumar, Logesh**
  **120365 SINGAPORE (SG)**
- **Nadarajan, Sivakumar**
  **640621 SINGAPORE (SG)**
- **Dasgupta, Souvik**
  **88045 Friedrichshafen (DE)**
- **Venkatraman, Aditya**
  **640610 SINGAPORE (SG)**
- **Mücke, Marcus**
  **86420 Diedorf (DE)**
- **Gupta, Amit**
  **650386 SINGAPORE (SG)**

(74) Representative: **Eisenführ Speiser**
**Patentanwälte Rechtsanwälte PartGmbB**
**Stralauer Platz 34**
**10243 Berlin (DE)**

(54) **CONTROLLER FOR A NUMBER OF COMPONENTS OF A HYBRID ELECTRICAL-POWER SYSTEM OF A HYBRID MICROGRID, HYBRID ELECTRICAL-POWER SYSTEM AND HYBRID MICROGRID**

(57) The invention regards a controller (100) for a number of components of a hybrid electrical-power system (200) of a hybrid microgrid, in particular for the hybrid electrical-power system (200) with the number of components, wherein a component is a hybrid electrical-power-generating asset (200.n) for providing electrical power for use in the hybrid microgrid, wherein the hybrid electrical-power-generating asset (200.1, 200.2, 200.N) comprises a genset and an electrical power storage. According to the invention the controller (100) comprises:
- a condition-information input interface (102) for receiving condition-information (104) indicative of an or a number of fault-related aspects of the hybrid electrical-power-generating asset (200.1, 200.2. 200.N);
- a health-status-estimation module (MODI, 110) that receives the condition-information (104) and is configured, using the condition-information (104), to determine and provide health-status information (112) for the given hybrid electrical-power-generating asset (200.1, 200.2, 200.N), which is indicative of a current operative condition of the given hybrid electrical-power-generating asset (200.n);
- a limitation-estimation module (MOD2, 120) that receives the determined health-status information (112) and is configured, using the health-status information (112), to determine and provide power-provision information (116) indicative of a current limitation of a provision of power of the given hybrid electrical-power-generating asset (200.n) due to its current operative condition; and
- a power-dispatch module (MOD3, 130) that receives the power-provision information (116) and load information (108) indicative of a magnitude of a load (300) of the hybrid electrical-power system (200) and is configured, using the power-provision information (116) and the load information (108), to determine and provide an operation-control setting (134) to the given hybrid electrical-power-generating asset (200.n).

EP 4 329 149 A1

Fig. 2

**Description**

The present invention relates to a controller for a number of components of a hybrid electrical-power system of a hybrid microgrid, in particular for the hybrid electrical-power system with the number of components, wherein a component is a hybrid electrical-power-generating asset for providing electrical power for use in the hybrid microgrid, wherein the hybrid electrical-power-generating asset comprises a genset and an electrical power storage.

The invention also relates to a hybrid electrical-power system for a hybrid microgrid. Further, the invention relates to the hybrid microgrid with a hybrid electrical-power-generating asset for providing electrical power for use in the microgrid and a load connectable to a load interface of the hybrid electrical-power-generating asset and said controller.

A microgrid is generally understood as a decentralized group of electricity sources and loads that normally operates, connected to and synchronous with the traditional wide area synchronous grid (macrogrid), but is able to disconnect from the interconnected grid and to function autonomously in "island mode" as technical or economic conditions dictate. In this way, microgrids improve the security of supply within the microgrid cell, and can supply emergency power, changing between island and connected modes.

Another use case is the off-grid application; it is called an autonomous, stand-alone or isolated microgrid. These microgrids are best served by local energy sources where power transmission and distribution from a major centralized energy source is too far and costly to execute. They offer an option for rural electrification in remote areas and on smaller geographical islands. As a controllable entity, a microgrid can effectively integrate various sources of distributed generation (DG), especially renewable energy sources (RES). In particular, such kind of microgrid is suitable for mobile or onsite applications like for vehicles or energy resources in the technical field of marine, aero or aerospace applications. Thus, a microgrid can be understood per definition as a decentralized group of interconnected loads and distributed energy resources (DERs) within clearly defined electrical boundaries that acts as a signal controllable entity with respect to the grid. A microgrid can connect and disconnect from the grid to enable it to operate in both connected or island-mode. Often the microgrid operates at low voltage meaning both low and medium voltage up to 35 kV. The distributed energy resources (DERs) can comprise e.g. microturbines, fuel cells, photovoltaics (PV), etc.). The storage devices like batteries, flywheels provide energy storage system and flexible loads.

Control and protection are difficulties to microgrids in general, as all ancillary services for system stabilization must be generated within the microgrid and low short-circuit levels can be challenging for selective operation of the protection systems. An important feature is also to provide multiple useful energy needs, such as heating and cooling besides electricity, since this allows energy carrier substitution and increased energy efficiency due to waste heat utilization for heating, domestic hot water, and cooling purposes (cross sectoral energy usage).

Thus, the operation of microsources in the microgrid network --like the aforementioned number of components, wherein a component is a hybrid electrical-power-generating asset for providing electrical power for use in the hybrid microgrid-- can provide benefits to the overall system performance, if managed and coordinated and maintained efficiently. Generally know approaches of control apply preventive maintenance, which can be assumed to be essentially based on a fixed time interval or a predictive maintenance which can be assumed to be essentially based on a maximum asset utilization point.

It is to be understood, that the meaning of a number of components of a hybrid electrical-power system of a hybrid microgrid may comprise a plurality of components but also may embrace only a single component. Thus, the meaning of "a number" in general shall embrace all countable numbers like one, two, three and so forth to a countable number of a plurality. In this sense, when "a component" of the number of components is addressed, it should be understood as to embrace a single component like any one of the number of components. Also, when "a component" of the number of components is addressed, this should embrace a situation when several (like a group of one or more components selected from the number) or in another situation all of the number of components are addressed. Likewise this language is used herein for other items.

In a preferred development still, it is to be understood that the controller as mentioned in the introduction is adapted for all of the components of the number of components of the hybrid electrical-power system of the hybrid microgrid, in particular for the hybrid electrical-power system with the number of components, wherein each of the components is a hybrid electrical-power-generating asset for providing electrical power for use in the hybrid microgrid, wherein the hybrid electrical-power-generating asset comprises a genset and an electrical power storage.

In US 9,229,437 a system, a method and a computer program product is described for determining an amount of an electric power to be generated in an electric power system and determining a total cost for generating the amount of electric power while satisfying at least one contingency constraint and one or more customer request. The system creates a real-time run optimization problem for calculating amount of the electric power to be generated and a total cost for generating the calculated amount of the electric power while meeting the at least one contingency constraint.

In US 8,126,685 a system for real-time optimization of power resources on an

electrical system is described. The system includes a data acquisition component, an analytics server, a control element and a client terminal. The data acquisition component is communicatively connected to a sensor configured to acquire real-time data output from the electrical system. The analytics server is communicatively connected to the data acquisition

component and is comprised of a virtual system modeling engine, an analytics engine and a power flow optimization engine. The virtual system modeling engine is configured to generate predicted data output for the electrical system utilizing a virtual system model of the electrical system.

Also a generally known approach of control is to apply a health-based maintenance, which can be assumed to be essentially based on a maintenance scheme that is scheduled after the mission is accomplished be reconfiguring the asset based on health using condition based control strategy.

In US 8,010,250 B2 a system and method is described for life optimal power management of a distributed or centralized battery network system for use in aircraft functions and subsystems. The method determines power priority of the subsystems, and selectively distributes power from the battery network system to the subsystems based on the power priority. Concurrently with distributing power, the method manages the energy in the battery network system. To determine whether the battery power is sufficient for aircraft functions, the method also computes and indicates the actual available energy left in the battery network systems. Therein a controller is provided that monitors battery parameters such as potential, current, voltage and temperature for each of the batteries in the centrally located battery network system by obtaining the battery parameters from each of the battery sensors and processors, and controller determines from the battery parameters a state of health and available capacity for each battery. With this approach, the system and methods can provide a persistent power supply in the event an unexpected battery failure occurs, thereby enabling the aircraft to safely maintain flight operability despite a battery failure. A life-optimal power management process is described which may begin by obtaining functional first parameters indicative of functional criticality (i.e., relative importance of powering) of each of the aircraft function. In practice, these first parameters are obtained from a table look-up. The table look-up may be stored in the power management module, a computer on-board the aircraft, a computer in a remote location from the aircraft, and the like. The first parameters may be predetermined, may be updated in real time, or may be forecast based on future flight profile needs.

A further demand arises for the inventive field of the hybrid microgrids and the like hybrid networks as mentioned in the introduction; namely to provide benefits to the overall system performance by a microgrid system controller, which is to be understood as the key of the hybrid microgrid operation.

A hybrid microgrid with load has a hybrid electrical-power system with the number of components, wherein a component is a hybrid electrical-power-generating asset for providing electrical power for use in the hybrid microgrid. The hybrid electrical-power-generating asset comprises a genset and an electrical power storage and thus --due to the combination of the genset and an electrical power storage-- hereinafter is refered to as a *hybrid* electrical-power-generating asset. When said so-called *hybrid* microgrid operates it is always important to make sure the active and reactive power dispatch from the hybrid electrical-power-generating assets are as per the command received from the hybrid microgrid system controller.

In the field of the invention, thus a hybrid asset or component is to be understood as a combination of a power storage entity and a power generating component in general; hereinafter an electrical power storage, in particular a battery storage, and a genset is provided and discussed with their specific demand.

The genset hereinafter is understood specifically as a combination of a primary mover --preferably an internal combustion engine-- and an electrical generator. Still nevertheless, the invention as described hereinafter is to be understood for being realized with or as any kind of hybrid microgrid and/or network as broadly defined hereinbefore.

More specifically a problem arises if there is a failure in the system of hybrid electrical-power-generating assets. A systematic failure could be established in a hybrid electrical-power-generating asset e.g. by a cylinder misfiring in the internal combustion engine like a gas/diesel engine or the like internal combustion engine. Additionally or alternatively a systematic failure could be established in a hybrid electrical-power-generating asset e.g. by the genset and based thereon further electrical failures or bearing problems especially of the electrical generator may arise. The system comprising such or the like faulty hybrid electrical-power-generating asset than may not operate as the dispatch command is violated due to its component conditions. This may cause instability in the microgrid and even also the power grid leading to blackout etc. in a worst case.

This is where the invention comes in, wherein it is an objective of the present invention to provide a controller, a hybrid electrical-power system and a hybrid microgrid, which is capable to be operated in an improved way, in particular also observing the demands of control for active and reactive power dispatch. Further it is in particular an object of the invention to provide a controller, a hybrid electrical-power system and a hybrid microgrid being capable to be operated in an improved way to apply a health-based maintenance even in the case one or more of a faulty hybrid electrical-power-generating asset. Further, the controller, a hybrid electrical-power system and a hybrid microgrid should be configured to determine an improved maintenance, in particular also observing that stress on the faulty asset is to be reduced.

This objective is achieved in a first aspect by the invention by a controller according to claim 1.

The controller according to the invention starts from a controller as mentioned in the introduction, i.e. the controller is for a number of components of a hybrid electrical-power system of a hybrid microgrid.

In particular, the controller is for the hybrid electrical-power system with the number of components, wherein the component is a hybrid electrical-power-generating asset for providing electrical power for use in the hybrid microgrid, wherein the hybrid electrical-power-generating asset comprises a genset and an electrical power storage. The hybrid electrical-power-generating asset is meant to in particular for providing electrical power to a load interface respectively to a load connectable to the load interface of the hybrid electrical-power system within the microgrid.

According to the invention and as defined in claim 1 the controller comprises:

- a condition-information input interface for receiving condition-information indicative of an or a number of fault-related aspects of the hybrid electrical-power-generating asset;
- a health-status-estimation module that receives the condition-information and is configured, using the condition-information, to determine and provide health-status information for the given hybrid electrical-power-generating asset, which is indicative of a current operative condition of the given hybrid electrical-power-generating asset.

In particular it should be understood that therein the given hybrid electrical-power-generating asset is a faulty hybrid electrical-power-generating asset indicative of a faulty operative condition.

Further according to the invention and as defined in claim 1 the controller comprises:

- a limitation-estimation module that receives the determined health-status information and is configured, using the health-status information, to determine and provide power-provision information indicative of a current limitation of a provision of power of the given hybrid electrical-power-generating asset due to its current operative condition; and
- a power-dispatch module that receives the power-provision information and load information indicative of a magnitude of a load of the hybrid electrical-power system and is configured, using the power-provision information and the load information, to determine and provide an operation-control setting to the given hybrid electrical-power-generating asset.

To achieve the object, the invention also in a second aspect leads to a hybrid electrical-power system of claim 15.

The hybrid electrical-power system is for a hybrid microgrid, with a number of components, wherein a component is a hybrid electrical-power-generating asset for providing electrical power for use in the hybrid microgrid, and a controller according to the first aspect of the invention

In particular, therein the controller is adapted to control electrical power to a load interface respectively to a load connectable to the load interface of the hybrid electrical-power system within the hybrid microgrid.

To achieve the object, the invention also in a third aspect leads to a hybrid microgrid wherein in the microgrid the controller according to the invention is adapted to control electrical power to a load interface respectively to a load connectable to the load interface of the hybrid electrical power system within the hybrid microgrid, in particular wherein the load is connectable to the load interface of the hybrid electrical power-generating asset and in particular also to the controller.

The hybrid microgrid has a hybrid electrical-power-generating asset for providing electrical power for use in the microgrid and a load connectable to a load interface of the electrical-power-generating asset and a controller according to the first aspect of the invention, in particular a hybrid microgrid with the hybrid electrical-power system according to the second aspect of the invention.

The invention starts from the idea to apply a health-based maintenance, which can be assumed to be essentially based on a maintenance scheme that is scheduled after the mission is accomplished be reconfiguring the asset based on health using condition based control strategy.

Based thereon the invention has recognized that for a hybrid electrical-power system of a hybrid microgrid it is advantageous to have proper condition-information available to apply specifically a health-status information for the given hybrid electrical-power-generating asset, which is indicative of a current operative condition of the given hybrid electrical-power-generating asset.

Specifically in a preferred development the invention proposes to apply a health-index-parameter (HI), for a given hybrid electrical-power-generating asset comprises genset health-status information and power storage health-status information.

It has been shown that based on such or other kind of health-status information a parametrized control can be established which has major advantages in performance and expandability as will be shown hereinafter. In particular based on using the health-status information the invention provides the possibility to determine a timeproposal information indicative of a remaining useful life (RUL) of the given electrical-power-providing asset.

Thus, the health-status information, in particular the health-status information and timeproposal information, according to the invention have been shown by the invention to be specifically useful as parameters of control for an improved control of a hybrid electrical-power system or microgrid.

The health-index-parameter (HI) and in particular the health-index-parameter (HI) and the remaining useful life (RUL) as a parameter can not only be used as a measure to indicate and monitor a remaining life or time to next maintenance or a likeliness of developing a failure in operation of a hybrid electrical-power-generating asset. But also to be applied in a control scheme thereof. The health-index-parameter (HI) and in particular the health-index-parameter (HI) and the remaining useful life (RUL) can be used as control parameters.

Thus, according to the invention, using the health-status information, to determine and provide power-provision information indicative of a current limitation of a provision of power of the given hybrid electrical-power-generating asset due to its current operative condition is proposed.

Receiving the power-provision information and/or load information is indicative of a magnitude of a load of the hybrid electrical-power system and is configured, using the power-provision information and/or the load information, to determine and provide an operation-control setting to the given hybrid electrical-power-generating asset in the inventive concept.

The inventive concept can be used in terms of optimizing a microgrid. The invention has been proposed and tested using simulation as well as hardware-in an in-loop demonstrator

In the invention a health assisted dispatch algorithm is devised, so that the failure conditions can be taken care of from the signatures and then the information is taken into consideration in the dispatch algorithm, so that it will take care of the asset conditions. Also this will make sure the maintenance of assets are done only when necessary unlike the regular maintenance. This also avoided unnecessary maintenance making the better availability of the assets and reduced maintenance cost while utilising largest possible effective asset life-time

Further advantageous developments of the invention are found in the dependent claims and indicate in detail advantageous possibilities to realize the concept described above within the scope of the task as well as with regard to further advantages.

In a preferred development the controller is adapted to provide the operation-control setting to the given hybrid electrical-power-generating asset and

- at least the given hybrid electrical-power-generating asset is operated according to the current operative-condition-related limitations.

Additionally or alternatively

- the components of the hybrid electrical-power system with the number of electrical-power-generating assets are operated such that sufficient electrical power is provided to the load.

As mentioned hereinbefore in a preferred development the health-status information for a given hybrid hybrid electrical-power-generating asset is in the form of a health-index-parameter, the health-index-parameter being estimated by means of a calculatory basis using a number of fault characteristic parameters assigned to a number of fault-related aspects of the given hybrid electrical-power-generating asset, in particular faulty hybrid electrical-power-generating asset.

In a preferred development the hybrid electrical-power-generating asset comprises:

- the genset as a combination of a primary mover, preferably an internal combustion engine, and an electrical power generator, and the electrical power storage as a battery storage. Thus, in a preferred development the health-status information, in particular health-index-parameter (HI), for a given hybrid electrical-power-generating asset comprises a genset health-status information and power storage health-status information.

In a preferred development the given hybrid electrical-power-generating asset is labelled as a faulty hybrid electrical-power-generating asset in that the current operative condition of the given hybrid electrical-power-generating asset is subject to an identified faulty operative condition, in particular in that a decision to label a faulty hybrid electrical-power-generating asset is based on one or more pre-determined faulty operative conditions.

As mentioned hereinbefore in a preferred development the limitation-estimation module is configured, using the health-status information, to determine a timeproposal information indicative of a remaining useful life (RUL) of the given electrical-power-providing asset.

In a particular preferred development the controller further comprises a health-based-maintenance module receiving the timeproposal information from the knowledge-based module, in particular the limitation-estimation module, and the operation-control parameters from the power-dispatch module.

Advantageously a health-based-maintenance module is configured to

- determine an optimal time for maintenance of the given electrical-power-providing asset and/or
- to operate the given hybrid electrical-power-generating asset with the operation-control setting until to a given time for maintenance of the given electrical-power-providing asset, and/or
- update a power setting and/or difference of setting based on the operation-control setting or the like fault helps, in particular wherein the given hybrid electrical-power-generating asset is labelled as a faulty hybrid electrical-power-generating asset in that the current operative condition of the given hybrid electrical-power-generating asset is subject to an identified faulty operative condition.

Thus, advantageously a health dispatch of a centralized battery system is used and a control algorithm to maintain the health index HI when a fault occurs in the battery. E.g. a health index definition of battery system by considering the various operating parameter and fault data.

An update of real power based on fault helps to reduce the loading on the battery system. An update of voltage/potential difference based on fault helps to reduce the stress on the faulty battery system.

E.g. in addition to a maximum power update of asset based on health, the development achieves that there will be change in the voltage for battery and reactive power change for genset as well for faulty subsystem. The corrective voltage/potential deviation from healthy system based on health index is carried out. Thus the stress on the faulty subsystem is reduced and the same faulty battery can be operated to accomplish the mission. The same applies for the genset with the update of reactive power through a capability curve.

Thus helping to accomplish the set mission with the faulty component in operation the control and method is adapted to optimize the fault mitigation to help maintain the health index.

RUL data (data about the remaining useful life or the RUL parameter as such) and load forecast data can be send with command signals to the control module for optimization. Optimization by means of fault mitigation in the incipient stage is preferred to reduce the stress propagation and maintain the health index of the subsystem until the set mission is complete.

In a particular preferred development - the limitation-estimation module is configured to determine current-power-provision information that comprises active-power-provision information and reactive-power-provision information indicative of a current constitution-related limitation of the provision of active power and reactive power by the genset, respectively.

In a particular preferred development, the power-dispatch module is configured to determine and provide setting-power-provision information (as an active-power setpoint and a reactive-power setpoint as part of the operation-control parameters for the at least one genset, wherein the setting-power-provision information are indicative of a target value, in particular the active-power setpoint and the reactive-power setpoint are indicative of a target value for an active power and a target value for a reactive power to be produced by the genset, respectively.

In a preferred development the power-dispatch module comprises a memory unit for storing reactive-power-allocation information that allocates to a value of the active power a value of the reactive power that the genset is capable of providing, and

- the power-dispatch module is configured to determine the reactive power setpoint using the determined active-power setpoint and the reactive-power-allocation information.

In a preferred development

- the health-status-estimation module comprises a memory unit for storing health-index-model information comprising fault-severity-allocation information that allocate, for each fault-related aspect of the given electrical-power-providing asset, a value of the sensor data to a fault-severity index, and
- for determining the health-status information, the health-status-estimation module is configured to determine a total sum of the fault-severity index for all fault-related aspects of the given hybrid electrical-power-generating asset using the sensor data and the fault-severity-allocation information.

A health dispatch of a genset and control algorithm can be used to provide a health index definition by considering various parameters and unbalance factor by using the IEEE standard

It is particular preferred that - the health-index-model information comprises aspect-weight-allocation information that allocate a weight to each fault-related aspect of the given hybrid electrical-power-generating asset indicative of how strongly a given fault-related aspect influences the operative condition of the given electrical-power-generating asset, and

- the health-status-estimation module (MOD1, 110) is configured to determine the total sum in form of a weighted total sum by weighting the fault-severity index of each fault-related aspect by a respective allocated weight given by the aspect-weight-allocation information.

In a preferred development the number of fault-related aspects of an electrical-power-generating asset, that has a genset, comprises at least one out of the group of fault-related aspects consisting of:

- a static eccentricity of a bearing and a dynamic eccentricity of the bearing of the electrical-power generator,
- cylinder misfirings of an engine of the prime mover, and a winding degradation of windings of the electrical-power generator.

In a preferred development the number of fault-related aspects of an electrical-power-generating asset, that has a battery storage, comprises at least one out of the group of fault-related aspects consisting of:

internal short circuit and external short circuit of a battery of the battery storage, and
thermal runaway of the battery storage.

In a particular preferred development the controller further comprises:

- a monitor module adapted for receiving and monitoring, in particular providing and/or alarming, a health-status information and/or a timeproposal information indicative of a remaining useful life of the given electrical-power-providing asset.

Particular salient features of the invention and the developments thereof have shown up as:

- Real-time estimation of components health index based on fault characteristics and remaining useful life; in particular using a health-status-estimation module and limitation-estimation module as claimed;
- Based on health of component, update of maximum real power limit and reactive capability curve maximum limit; in particular with a power-dispatch module as claimed;
- Further in a development a health-assisted real and reactive power set point for the primary controller is possible with a power-dispatch module and health based maintenance strategy in a health-based-maintenance module.

In contradistinction to existing methods, from the point of view of the invention

1. Real-time components health index estimation and time to failure is possible;
2. Maximum limit updating of real power and reactive power based on health index is possible;
3. Cost change, when the stress on the asset is reduced based on maximum power limit change is possible.

These and other aspects of the invention will be apparent from and elucidated with reference to the embodiments described hereinafter with reference to the enclosed drawings. The embodiments of the invention are described in the following on the basis of the drawings in comparison with the state of the art, which is also partly illustrated. The latter is not necessarily intended to represent the embodiments to scale. Drawings are, where useful for explanation, shown in schematized and/or slightly distorted form. With regard to additions to the lessons immediately recognizable from the drawings, reference is made to the relevant state of the art. It should be borne in mind that numerous modifications and changes can be made to the form and detail of an embodiment without deviating from the general idea of the invention. The features of the invention disclosed in the description, in the drawings and in the claims may be essential for the further development of the invention, either individually or in any combination. In addition, all combinations of at least two of the features disclosed in the description, drawings and/or claims fall within the scope of the invention. The general idea of the invention is not limited to the exact form or detail of the preferred embodiment shown and described below or to an object which would be limited in comparison to the object claimed in the claims. For specified design ranges, values within the specified limits are also disclosed as limit values and thus arbitrarily applicable and claimable. Further advantages, features and details of the invention result from the following description of the preferred embodiments as well as from the drawings. In the following, a summary of the figures is given.

In the following it is shown in:

FIG. 1: a preferred embodiment of a hybrid electrical-power system as part of a microgrid with a load connected to a load interface of the electrical-power system and a preferred embodiment of a controller for the electrical-power system shown in schematic form for a preferred embodiment thereof;

FIG. 2: a preferred embodiment of a method of operating the preferred controller as shown in FIG. 1 for controlling the electrical-power system of a microgrid with a sequence of steps shown in a general form;

FIG. 3: a preferred embodiment of the controller as shown in FIG. 1 for being operated with the method as shown in FIG. 2, wherein the controller provides for a number of modules as shown in a preferred embodiment and connected in a preferred functional connection as also shown therewith;

FIG. 4: a preferred embodiment of a health control module (MOD4) in detail for preferred implementation into the controller shown in FIG. 3;

FIG. 5: a preferred embodiment of a power-dispatch module (MOD3) in detail for preferred implementation into the controller as shown in FIG. 3;

FIG. 6: a preferred embodiment of the health-status-estimation module (MOD1) in detail for preferred implementation into the controller as shown in FIG. 3;

FIG. 7: a schematic diagram of an exemplary example of relative power deviation shown as normalized change or error value dependent on a health index of a genset (view (a)) and a battery (view (b)) for implementation into a limitation-estimation module (MOD2), wherein a preferred embodiment of a limitation-estimation module is for implementation into a controller as shown in FIG. 3;

FIG. 8: a supplemental view of relative cost change dependent on a health index due to the power difference of FIG. 7, again based on a generator health index (view (a)) and a battery health index (view (b));

FIG. 9: an illustrating graph for health index based control with advantages of a health-based maintenance as compared to a preventive maintenance on the one hand and a predictive maintenance on the other hand.

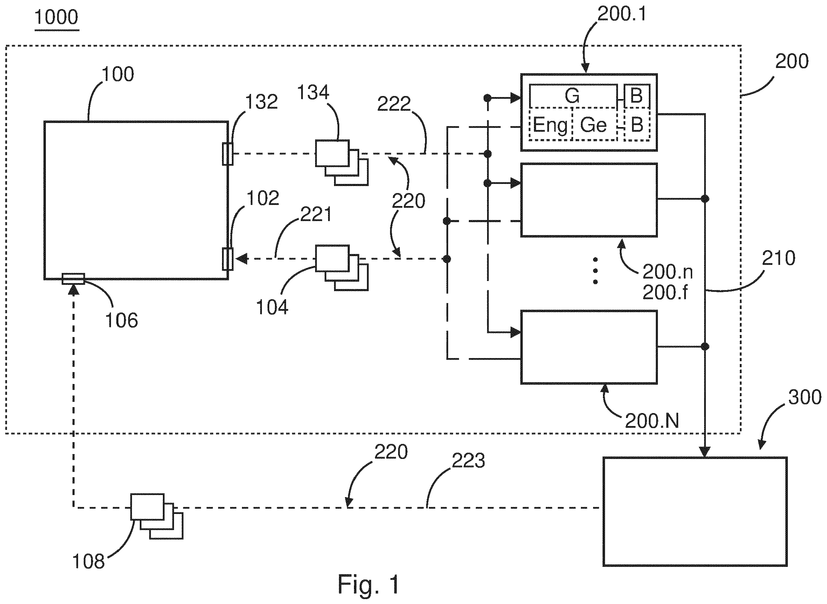

FIG. 1 in a schematic view a hybrid electrical-power system 200 is shown with a number of components, wherein each of the components is formed as a hybrid electrical-power-generating asset 200.1, 200.2, 200.3,...200.N. The appendix .1 to .N indicates that the number of components can be any number n between one (n=1; a single component) and a countable large number N. Thus, a hybrid electrical-power system 200 as shown in the preferred embodiment of FIG. 1 may comprise a single or a multitude of electrical-power-generating assets indicated in the graph of FIG. 1. Generally, a component is referred to as a hybrid electrical-power-generating asset 200.n.
Further, in the following a faulty component is referred to as a faulty hybrid electrical-power-generating asset 200.f.
Also, as indicated with Eng and Ge, each of the hybrid electrical-power-generating assets comprises a genset G, wherein said genset in this case is formed by a primary mover in form of an internal combustion engine Eng. Thus, the genset in the embodiments described hereinafter comprises an electrical-power generator Ge and an internal combustion engine Eng. Further, the genset G is electrically connected to an electrical-power storage; said power storage in this case is shown herein as a battery storage B.
Thus, each of the hybrid electrical-power-generating assets 200.1, ... 200.N is formed as a combination of a genset G and a battery storage B as explained hereinabove, wherein the genset G is formed with an internal combustion engine Eng and an electrical generator G. Of course, as already explained, the hybrid electrical-power system 200 may consist of only a single hybrid electrical-power-generating asset 200.n which in turn comprises a genset G with battery storage B.
Said hybrid electrical-power system 200 is electrically connected for providing electrical power to a load 300 by way of an electrical-power line 210 or the like network interconnection, wherein a network of electrical-power lines 210 (full lines in FIG. 1) is adapted to interconnect each of the electrical-power-generating assets 200.n for providing electrical power as shown in FIG. 1.
Thus, FIG. 1 in essence with the hybrid electrical-power system 200 and load 300 shows the basic structure of a hybrid microgrid 1000 which beyond this embodiment in general and broadly is to be understood as a decentralized group of electricity sources like the number of hybrid electrical-power-generating assets 200.n as discussed and shown in FIG. 1 and a number of loads like the load 300 shown as an example therein.
Normally, said microgrid 1000 operates connected to and synchronous with the traditional wide area synchronous grid (not shown) for exchanging electrical-power; the traditional wide area grid also sometimes is referred to as a macrogrid.
Still also, an interconnected hybrid microgrid 1000 as shown in the embodiment of FIG. 1 is also able to be disconnected from the macrogrid and is able to function autonomously which in such a case or sometimes is referred to as operating in an "island mode".
The mode of operation generally is dictated by the technical or economic conditions of the microgrid embedded in the macrogrid. In this way, microgrids improve the security of supply within the microgrid which is shown as one cell in FIG. 1 and the microgrid in general can supply electrical power but also --more importantly-- emergency electrical power when changing between island and connecting modes.

Sometimes, the hybrid microgrid cell as shown in FIG. 1 can also be understood as a grid of distributed energy resources (DER) with one or a group or the like of interconnected loads, wherein clearly defined electrical boundaries are provided such that the hybrid microgrid cell acts as a single controllable entity with respect to the macrogrid.

Further the microgrid cell of the microgrid 1000 as shown in FIG. 1 is referred to as a hybrid microgrid 1000 hereinafter as at least one or a number or a majority -if not all-- of the components are formed as hybrid electrical-power-generating asset 200.n; i.e. an asset wherein a genset G (preferably with an electrical-power generator Ge and an internal combustion engine Eng) is combined with a power storage (preferably a battery storage B as shown in this embodiment)

Thus, as shown in FIG. 1, the microgrid cell of the microgrid 1000 provides for a hybrid electrical-power system 200 of DERs, herein referred to as hybrid electrical-power-generating assets 200.1, .. 200.N, wherein said assets 200.n are controlled by a controller 100 shown in schematic form; the controller 100 is signaling interconnected by way of signal lines (dashed lines in FIG. 1) between the controller 100 and the assets 200.1, ... 200.N. The signal lines 220 in FIG. 1 depict all signal lines 220 of the signaling network formed thereby between the controller 100 and the assets 220.n and the load 300.

Correspondingly, the controller 100 is provided in a preferred embodiment for a number of components of a hybrid electrical-power system 200 of the hybrid microgrid 1000, in particular for the hybrid electrical-power system 200 with the number of components. Therein, the component, more specifically each component of the number of components, is a hybrid electrical-power-generating asset 200.n for providing electrical power for use in the hybrid microgrid 1000, wherein the hybrid electrical-power-generating asset 200.1, 200.2, 200.N comprises a genset and an electrical power storage. In particular the hybrid electrical-power-generating asset 200.1, 200.2, 200.N in the hybrid electrical-power system 200 thereby is adapted for providing electrical power to a load interface respectively to be provided to a load 300 connectable to the load interface of the hybrid electrical-power system 200 within the microgrid 1000 as indicated and described above.

The signal lines 220 to and between the assets 200.1, ... 200.N of the hybrid electrical-power system 200 (DER) and the controller 100 herein are provided to communicate condition information 104 from the assets 200.n to the controller 100 by way of an up-link signal line 221 and a condition information input interface 102. A condition-information input interface 102 for receiving condition-information 104 is indicative of an or a number of fault-related aspects of the hybrid electrical-power-generating asset 200.1, 200.2. 200.N; namely in particular a faulty hybrid electrical-power-generating asset 200.f.

Further, in turn, the controller 100 is able to provide by way of a control output interface 132 and a down-link signal line 222 operation control settings 134 for control of an asset 200.1, ... 200.N. The operation control setting 134 is able to advantageously control each of the assets independent on the condition information data 104.

Further, as a consequence, each of the assets 200.1,... 200.N is able to provide electrical power by way of a power line 210 (full line) to the load 300.

Still further, the load 300 is signal connected by way of a load information input interface 106 and a load signal line 223 to the controller 100 for providing load information 108, which is indicative of the condition of the load and demands thereof as such. In this particular case, the load information 108 is indicative of a magnitude of the load 300 to be served for by said electrical power 210. Thus, the operation control setting 134 as discussed above is set in dependence on the condition information 104 received from each of the assets 200.1, ... 200.N and the load information 108 received from the load 300 by the controller 100.

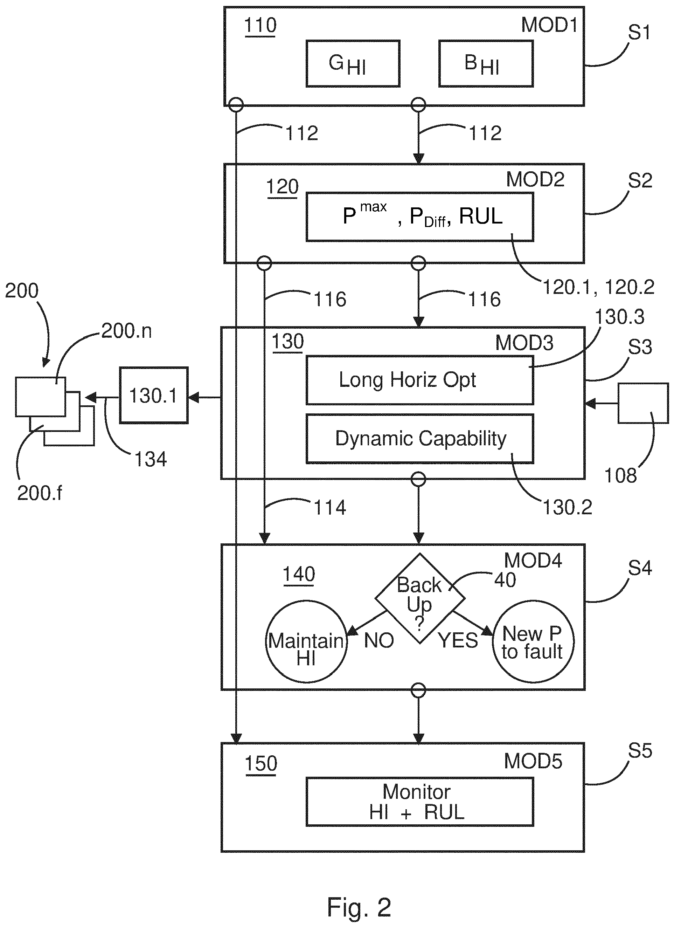

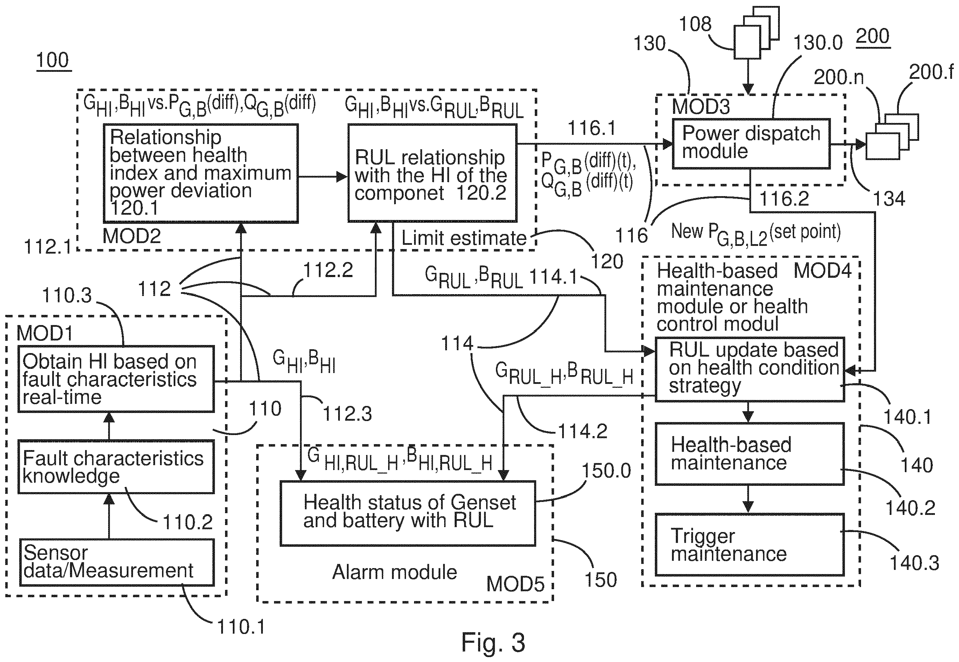

FIG. 2 schematically shows a preferred embodiment of a method to operate the controller 100 as shown in FIG. 1 in schematic form and as will be described hereinafter in detail with reference to in particular the preferred embodiment of FIG. 3.

Generally, the controller 100 is operated by way of generating health-status information 112 of a health-index-parameter for the genset G and the battery storage B of any of the hybrid electrical-power-generating asset 200.1, ... 200.N; i.e. any hybrid electrical-power-generating asset 200.n, in particular a faulty hybrid electrical-power-generating asset 200.n. Thus, a health-status-estimation module MOD1, 110 receives the condition-information 104 and is configured, using the condition-information 104, to determine and provide health-status information 112 for the given hybrid electrical-power-generating asset 200.1, 200.2, 200.N, which is indicative of a current operative condition of the given hybrid electrical-power-generating asset 200.n. In particular therein the given hybrid electrical-power-generating asset 200.n can be a faulty hybrid electrical-power-generating asset 200.f indicative of a faulty operative condition. In a step S1, the health-status-estimation module MOD1, 110 is operated to determine and provide said health-status information 112 to a further module, namely in this case a limitation-estimation module MOD2, 120 and a monitor module MOD5, 150.

In a second step S2 by way of the limitation-estimation module MOD2, 120 based on said health-status information 112 a maximum power deviation --this is in particular a maximum real power difference P(diff) and/or a maximum reactive power difference Q(diff)-- is set based on a relationship between the health index HI and the maximum power deviaton in a first limitation-estimation unit 120.1. In this embodiment as described hereinafter said health-status information 112 comprises, respectively consists of a health-index-parameter HI for genset G and battery storage B. In particular in this embodiemt the health-status information 112 for a given hybrid electrical-power-generating asset 200.n is in the form of a health-index-parameter HI, the health-index-parameter HI being estimated by means of a calculatory basis using a number of fault characteristic parameters assigned to a number of fault-related aspects of the given hybrid electrical-power-generating asset 200.n, in particular of a faulty hybrid electrical-power-generating asset 200.f.

As follow up thereon a remaining useful life RUL relationship with the health index HI of the hybrid electrical-power-generating asset 200.1, ...200.N is provided in a second limitation-estimation unit 120.2. Once the maximum power deviation P(diff), Q(diff) is provided it is understood that determining and provision thereof can be established in a dynamic, i,e, transient, way - thus said maximum real power difference P(diff) and/or a maximum reactive power difference Q(diff) are provided as function of time P(diff)(t), Q(diff)(t) to the power-dispatch module MOD3, 130. More specifically the power difference values can be determined and provided specifically related with the genset G and the battery B in terms of P_G(diff)(t), Q_G(diff)(t) respectively P_B(diff)(t), Q_B(diff)(t) for the hybrid microgrid 1000, respectively the hybrid electrical-power system of assets, i.e. the hybrid electrical-power assets 200.1 .200.N - hereinafter a short form of abbreviation is used as P_G, B (diff)(t), Q_G, B (diff)(t).

Thus, the limitation-estimation module MOD2, 120 receives the determined health-status information 112 and is configured, using the health-status information 112, to determine and provide power-provision information 116 indicative of a current limitation of a provision of power of the given hybrid electrical-power-generating asset 200.n due to its current operative condition. Additionally or alternatively the limitation-estimation module MOD2, 120 is configured, using the health-status information 112, to determine a timeproposal information 114 indicative of a remaining useful life RUL of the given electrical-power-providing asset 200.n.

Especially the health-based-maintenance module 140, MOD4 receives the timeproposal information 114 from the knowledge-based module, in particular from said limitation-estimation module MOD2, 120. Further, the health-based-maintenance module 140, MOD4 receives the operation-control parameters from the power-dispatch module MOD3, 130. These and other kind of information hereinafter is referred to in general as power-provision information 116 to the power-dispatch module MOD3, 130 and in a particular also to the health-based-maintenance module 140, MOD4 as shown in FIG. 2 and in detail in FIG. 3 and follow up.

The power-dispatch module MOD3, 130 receives the power-provision information 116 and, in particular also, the aforementioned load information 108. The aforementioned load information 108 is indicative of a magnitude of a load 300 of the hybrid electrical-power system 200. The power-provision information 116 and in particular also in combination with the load information 108 is configured to use the power-provision information 116 and the load information 108 to determine and provide the aforementioned operation-control setting 134 to the given hybrid electrical-power-generating asset 200.n. Thus, the power-dispatch module MOD3, 130 receives the power-provision information 116 and load information 108 indicative of a magnitude of a load 300 of the hybrid electrical-power system 200. Further the power-dispatch module MOD3, 130 is configured, using the power-provision information 116 and the load information 108 to determine and provide an operation-control setting 134 to the given hybrid electrical-power-generating asset 200.n.

The power-dispatch module MOD3 in step S3 is in particular adapted to provide a long horizon optimization of power adaptation from a third control unit 130.3 as well as a dynamic capability adaptation from a second control unit 130.2. This also approves a load demand available for said power-dispatch module MOD3. The engine control unit as a first control unit 130.1 provides the aforementioned operation-control setting 134 to the given hybrid electrical-power-generating asset 200.n.

Still further, in a fourth step S4 by way of a health control module MOD4, 140 it is indicated whether a backup generation of power is available in a request 40. In the case that no backup power generation is available the hybrid electrical-power system 200 with the number of hybrid electrical-power-generating assets 200.1, 200.N is operated with fault mitigation and optimization for each asset 200.1, ... 200.N including a possibly faulty hybrid electrical-power-generating asset 200.f to maintain the health index as far as possible and accomplish the mission depending on the load requested. In the case that a backup power generation is available however of course a new power maximum request can be set for a hybrid power generation asset 200.n depending on the situation.

Thus an operation-control setting 134 is provided to the given hybrid electrical-power-generating asset 200.n. In a first variant at least the given hybrid electrical-power-generating asset 200.n is operated according to the current operative-condition-related limitations. Additionally or alternatively the components of the hybrid electrical-power system 200 with the number of electrical-power-generating assets 200.1, 200.2, 200.N are operated such that sufficient electrical power 210 is provided to the load 300.

More particular the health-based-maintenance module 140, MOD4 is configured to

- determine an optimal time for maintenance of the given electrical-power-providing asset 200.n and/or
- to operate the given hybrid electrical-power-generating asset 200.1, 200.2, 200.N with the operation-control setting 134 until to a given time for maintenance of the given electrical-power-providing asset 200.n.

Additionally or alternatively the health-based-maintenance module 140, MOD4 is further configured to

- update a power setting and/or difference of setting based on the operation-control setting 134 or the like fault helps. In particular therein the given hybrid electrical-power-generating asset 200.n is labelled as a faulty hybrid electrical-power-generating asset in that the current operative condition of the given hybrid electrical-power-generating asset 200.1, 200.2, 200.N is subject to an identified faulty operative condition.

In a fifth step S5, the actual health index HI and remaining useful life RUL can be monitored. In particular in a monitor module 150, MOD5 an alarm or the like further measure can be taken based thereon. Thus, therein a monitor module 150, MOD5 is adapted for receiving and monitoring, in particular providing and/or alarming, a health-status information 112 and/or a timeproposal information 114 indicative of a remaining useful life RUL of the given electrical-power-providing asset.

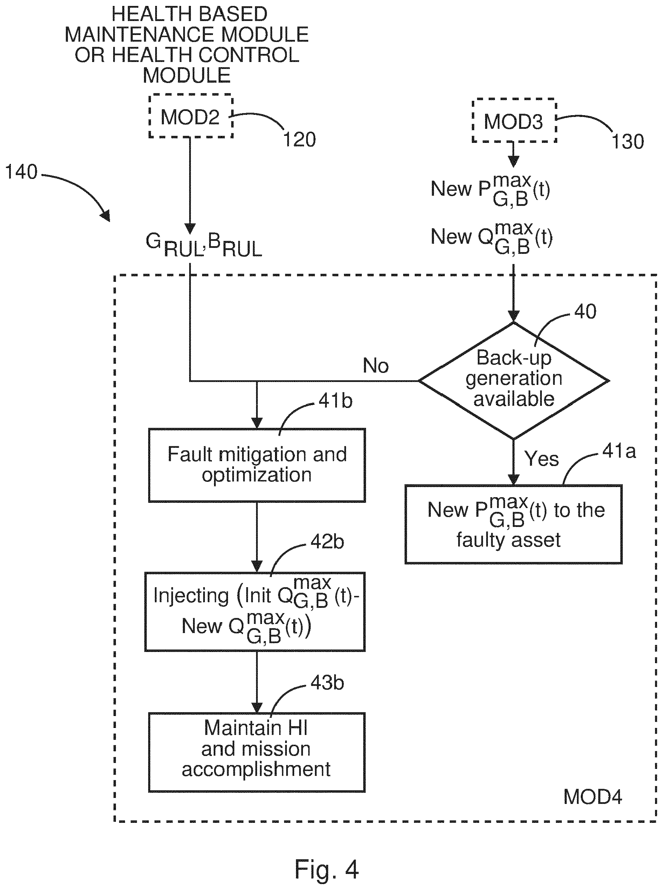

The aforementioned method of operation is further elucidated with details as shown in the embodiment of the controller 100 depicted in FIG. 3. As follow-up with FIG. 4, FIG. 5 and FIG. 6 and FIG. 7, the modules MOD4, MOD3, MOD1 and MOD2 as introduced above are explained in more detail. FIG. 3 shows in more detail said overview of a controller 100 to provide a health-constrained power dispatch for a hybrid microgrid 1000 as has been explained before. As is visible from the embodiment in FIG. 3, the controller 100 comprises modules MOD1, MOD2, MOD3, MOD4 and MOD5.

Said modules MOD1, MOD2, MOD3, MOD4 and MOD5 are co-interacting by way of health-status information 112 in the form of a health-index-parameter HI, namely a health-index-parameter HI for the genset G as explained before and a battery storage B as explained before. Respective health-index-parameters HI are labeled as $G_{HI}$ and $B_{HI}$.

A second aspect of information is provided by timeproposal information 114, wherein in this case of embodiment the timeproposal information is indicative of a remaining useful life RUL of a given hybrid electrical-power asset 200.n. Also, in this case the remaining useful life RUL is indicated for the genset G and the battery storage B and thus labeled as $G_{RUL}$ and $B_{RUL}$.

Thus, in this case the information regarding the genset G and the battery storage B is related with both the health index HI and the remaining useful life RUL, the indices are combined and as also shown in FIG. 3.

A third aspect of information communicated between the modules of the controller 100 is related with real power P and reactive power Q of the electrical-power-providing asset, namely of the genset G and/or the battery storage B; both indices are labeled with the real power P and reactive power Q, respectively. More precisely, a real-power difference P_G,B (diff) and reactive-power difference Q_G,B(diff) static and also dynamic; the latter in particular indicated in transient form as function of time as P_G,B (diff)(t), Q_G,B(diff)(t) as explained above.

Further a setpoint of real and reactive power P(setpoint) and Q(setpoint) are indicated with New-P(setpoint) and New-Q(setpoint) --respectively, as New-Pmax and New-Qmax which is explained further below-- from the power power-dispatch module MOD3. In both cases the powers are related with the genset and the battery storage G, B and which is shown throughout the figures as said aspect of power-related information 116.

In other words, the power-provision information 116 can be provided as a current power-provision information 116 like an actual power value or an actual power difference value depending on the situation. The power-provision information 116 can also be provided as a setting power-provision information; the latter can be provided as a "setpoint-power" or a "max-power" for setting respectively demand or limitation in a forward or backward control loop for managing depending --on the situation-- and which will be labeled in detail herein after.

Thus, it may be understood from the embodiment of FIG. 3 that a health-status-estimation module MOD1, 110 and a limitation-estimation module MOD2, 120 and a monitor module MOD5, 150 are provided in a first row of the control 100. Whereas the health-status-estimation module MOD1 is adapted to provide health-status information 112, in particular a health-index-parameter HI, said health-status information 112 is provided to the limitation-estimation module MOD2, 120 and the monitor module MOD5, 150. As shown in FIG. 3, the health-status information 112 is in the form of a health-index-parameter HI generated with dedication to the genset and thje battery storage respectively; i.e. as labeled G_HI, B_HI shown with the first kind health-status information 112.1 to the limitation-estimation module MOD2, 120, as the second kind health-status information 112.2 to the limitation-estimation module MOD2, 120 and as the third kind health-status information 112.3 to the monitor module 150, MOD5.

Said limitation-estimation module MOD2, 120 has an above mentioned first limitation-estimation unit 120.1 providing a relationship between the health index HI and the maximum power deviaton - the first limitation-estimation unit 120.1 receives the first kind health-status information 112.1. Said limitation-estimation module MOD2, 120 further has an above mentioned second limitation-estimation unit 120.2 providing a useful life RUL relationship with the health index HI of the hybrid electrical-power-generating asset 200.n.

Further, the controller 100 in the embodiment of FIG. 3 provides for a power-dispatch module MOD3, 130, and a health-based-maintenance module MOD4, 140; the latter hereinafter sometimes also is referred to as a health control module. As understood from the graph of FIG. 3, the timeproposal information 114, in particular the remaining useful life RUL, is generated from the limitation-estimation module MOD2, 120 using the health-status information 112, in particular the health-index-parameter HI.

A first kind health-status information 114.1 basically is provided to the health-based-maintenance module MOD4, 140; the first kind health-status information 114.1 comprises the remaining useful life RUL both for the genset G and the battery storage B. Further, a second kind health-status information 114.2 basically is provided to the monitor module MOD5, 150; the second kind health-status information 114.2 comprises the up-dated remaining useful life RUL both for the genset G and the battery storage B. Consequently, the timeproposal information 114 is used as follow-up of the health-status information 112 as a sequential information and provided to the health-based-maintenance module MOD4 and the monitor module MOD5.

Further, as a third aspect, said power-provision information 116 generated by the limitation-estimation module MOD2, 120 is provided to the power-dispatch module MOD3, 130 as the first kind power-provision information 116.1 and further evaluated and provided to the health-based-maintenance module MOD4, 140 as the second kind power-provision information 116.2.

Thereby, as has been indicated above, the controller 100 not only is able to provide an operation control setting 134 to the given hybrid electrical-power-generating asset 200.1, ... 200.N by means of the power-dispatch module MOD3, 130 based on the load information 108.

Further, a power-provision information is provided as generated by the limitation-estimation module MOD2 as a first kind power-provision information 116.1. Generated by the power-dispatch module MOD3 a second kind power-provision information 116.2 is provided. The power-provision information 116 is used to be evaluated in the heath-based-maintenance module MOD4, 140 to provide a health-based maintenance of a given in particular faulty asset 200.f to thereby provide a fault mitigation for the genset G and the battery storage B in operation and as will be explained in detail herein after.

In a third aspect also the monitor module MOD5, 150 is provided and adapted to monitor the health-status information 112, in particular the health-index-parameter HI and the timeproposal information 114, in particular the remaining useful life RUL for further monitoring control of the power-generating asset 200.1, ... 200.N.

The above-mentioned health-status-estimation module MOD1, 110 --as shown in the embodiment of the controller 100 of FIG. 3-- provides as a first function shown therein a sensor device for providing data or measurement information as to the condition for a given hybrid electrical-power-generating asset 200.1, ... 200.N.

Said sensor or measurement data 110.1 are to be understood as an exemplifying condition information 104 mentioned before to determine and provide health-status information 112 for said asset 200.n which is indicative of a current operative condition of said hybrid electrical-power-generating asset 200.n. In particular, said sensor or measurement data 110.1 should be indicative of a faulty operative condition of a faulty hybrid electrical-power-generating asset 200.f as one of the hybrid electrical-power-generating assets 200.1, ... 200.N; in a particular example of a given electrical-power-generating-asset 200.1, ... 200.N.

Based on said sensor or measurement data 110.1, a certain knowledge 110.2 of fault characteristics can be collected and gathered; for instance the sensor or measurement data 110.1 can be further examined and developed and provided in a knowledge-based tool or data bank as a fault characteristics knowledge 110.2. Based on the fault characteristics knowledge 110.2, a calculation of a dedicated health status information 112, in particular a health-index-parameter HI can be obtained based on said fault characteristics knowledge 110.2. Otaining said health-index-parameter HI can be done by a real-time provision unit 110.3 as shown in the embodiment of the health-status-estimation module MOD1 of FIG. 3.

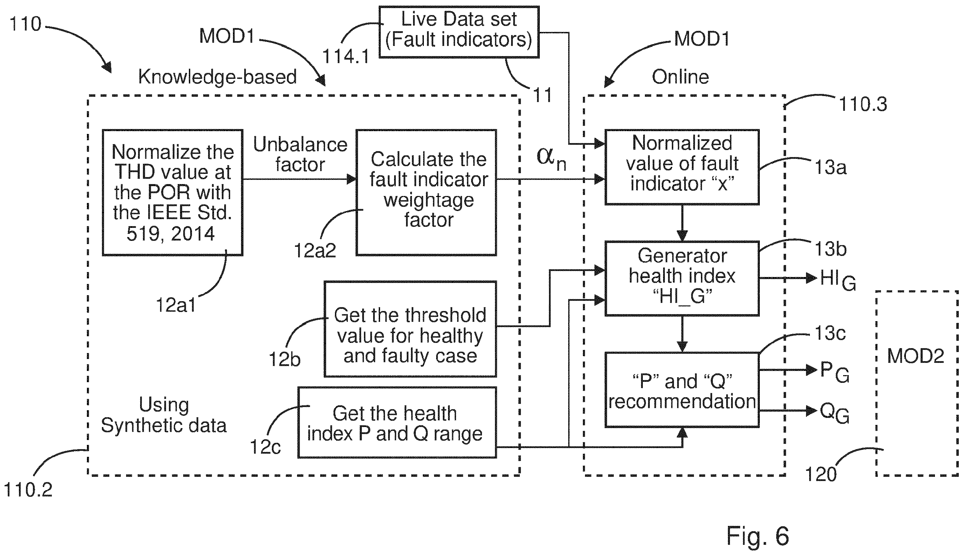

The details of this operation will be further explained in detail with regard to the scheme shown in FIG. 6. The result of this process, namely the health-index-parameter HI of the genset $G_{HI}$ and the battery storage $B_{HI}$ is provided as indicated above to the monitor module MOD5, 150 and the limitation-estimation module MOD2, 120.

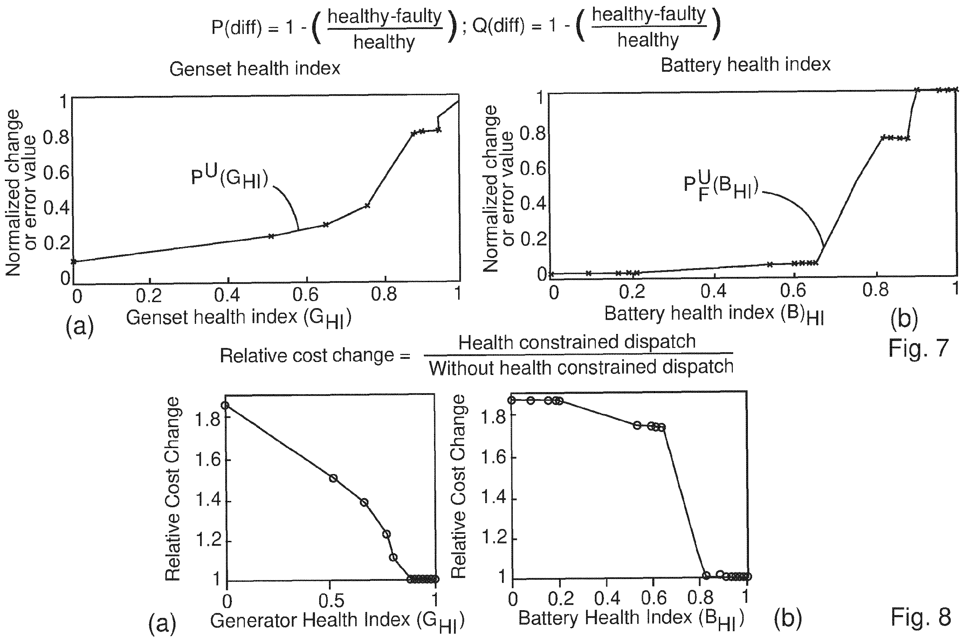

In the limitation-estimation module MOD2, 120 in a first limitation-estimation unit 120.1 the relationship between the health-index-parameter HI and the maximum power deviation of said asset 200.1, ... 200.N is provided in a first limitation-estimation unit 120.1 and as will be explained in more detail with regard to FIG. 7.

Based on said relationship in the first limitation-estimation unit 120.1 in a second limitation-estimation unit 120.2 a RUL relationship is constituted with the health-index-parameter HI of said faulty hybrid electrical-power-generating asset 200.1, ... 200.N and can be understood in more detail with regard to FIG. 7; therein a normalized change or error value depending on the health-index for the genset G and the battery storage B is shown.

More precisely, as a result of the process as described with FIG. 7; a corresponding real-power difference P(diff) and reactive-power difference Q(diff) can be obtained for the asset 200.n, in particular for a faulty asset 200.f; namely for the genset G and the battery storage B. Respectively these are depicted with the real power difference $P_{G,B}(diff)(t)$ as a function of time (t) and also correspondingly with regard to the reactive-power difference as $Q_{G,B}(diff)$ also as a function of time (t).

The real-power difference (in simple abbreviation P(diff)) and reactive-power difference (in simple abbreviation Q(diff)) are provided to the power-dispatch module MOD3, 130 as shown in the embodiment of controller 100 in FIG. 3 and as has been explained before as an exemplifying example of a power-provision information 116; more particular as the first kind power-provision information.

Further, the timeproposal information 114 herein given as a remaining useful life RUL is provided to the health-based-maintenance module MOD4 as seen from the embodiment of controller 100 in FIG. 3. Said details as an exemplifying example of calculation and process are more in detail elucidated with regard to FIG. 7.

The power-dispatch module MOD3, 130 as shown in the embodiment of controller 100 in FIG. 3 based on the power difference P(diff), Q(diff) evaluates and determines the operation control settings 134 for the given electrical-power-providing asset 200.n or in particular a faulty hybrid electrical-power-generating asset as shown in FIG. 2.

Further, as shown in FIG. 3, in this preferred embodiment according to the concept of the invention, a new power setpoint "New-P(setpoint)" is set by means of operation of the power-dispatch module MOD3, 130 both for the genset G and the battery storage B.

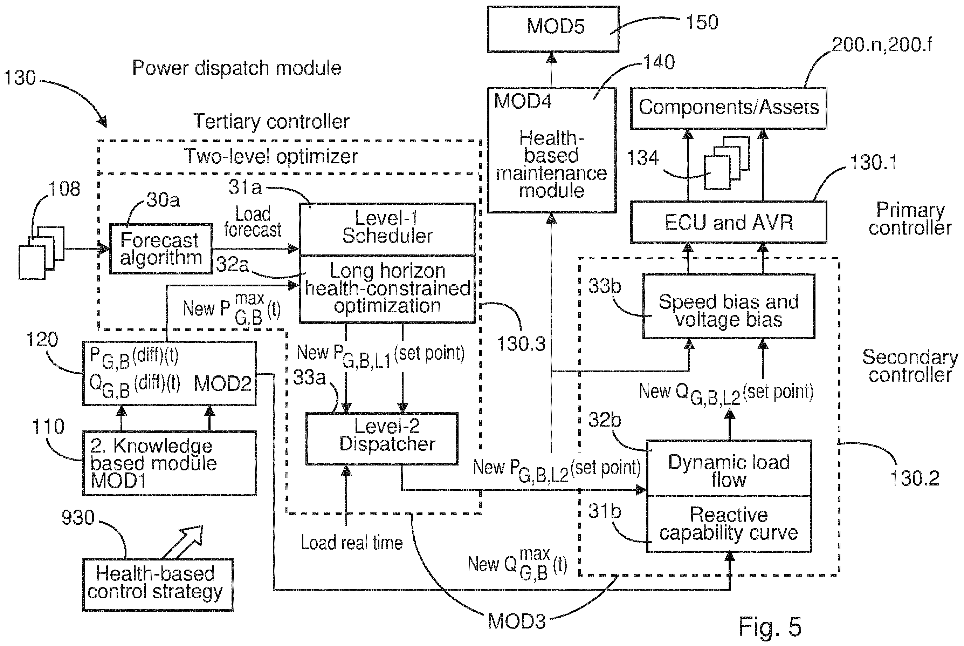

Said new power setpoint actually is established for the new real power new setpoint "New-P(setpoint)" accompanied also by the reactive power new setpoint "New-Q(setpoint)" as will be explained with FIG. 5. The new power setpoint is provided to the health-based-maintenance module MOD4, 140 as seen from the embodiment of controller 100 in FIG. 3; this relates to a second aspect of power-provision information 116, namely as said second kind power-provision information 116.2 as has been explained herein before. The details of this process are further explained with regard to the embodiment shown in FIG. 5.

The health-based-maintenance module MOD4, 140 --which can also be referred to as a heath control module-- as shown in the embodiment of controller 100 of FIG. 3, provides for basically three functional units.

A first health control unit 140.1 provides for an update of the RUL parameter based on the health-index-parameter HI and a health condition strategy. This can be further understood from the details shown in FIG. 4.

Based on said first health control unit 140.1 in a second health control unit 140.2 a health-based maintenance can be set in order to be operated on demand.

In the case of a demand, said health-based maintenance can be triggered in a third health control unit 140.3 as best seen from the sequence of units 140.1, 140.2, 140.3 in FIG. 3 and as is further explained in the embodiment of the health control module 140 shown in FIG. 4.

As further at best seen from the embodiment of controller 100 in FIG. 3, said health control module MOD4, 140 receives from the limitation-estimation module MOD2, 120 in a first kind health-status information 114.1 an actual RUL-parameter RUL. Further the health control module MOD4, 140 provides to the monitor module MOD5, 150 in a second kind health-status information 114.2 an updated RUL parameter; the latter is labelled health-index-parameter RUL-HI, both for the genset G and the battery storage B.

As is further shown in the embodiment of FIG. 3 the monitor module MOD5, 150 in the controller 100, said health-index-parameter HI and the updated RUL parameter RUL H, is monitored and/or displayed by way of the monitor module MOD5, 150. Thus, due to in particular the co-acting of modules MOD4, MOD5, MOD1, a fault mitigation for the genset G and battery storage B and also monitoring of the current health-index-parameter HI and updated RUL-parameter RUL is provided in a time-transient sequence.

The further functions following the developed concept of the invention are provided in addition to the operation control settings to an asset 200.n, in particular to a faulty asset 200.f as explained before. A synergetic combination of providing said operation control settings 134 and providing an accurate and transient fault mitigation during operation of a faulty asset is possible. Thus, operation is effected with less stress and thus elongation of operation time even though a faulty asset has certain restrictions in operation due to a fault. In particular, an elongation of the remaining useful life RUL of the hybrid electrical-power system 200 is achieved thereby. This is explained in particular with regard to the health-based-maintenance module MOD4, 140 and monitor module MOD5, 150 in the following.

Turning to FIG. 4, the health-based-maintenance module MOD4, 140 is shown in more detail. Therein in particular the operation of the second health control unit 140.2 is further explained in a variant thereof; in particular a varied sequence of operation steps are depicted in the varied embodiment of the health control module MOD4, 140 of FIG. 4.

The updated or new power set- or max-points P herein are established as new power max-points labeled as "New P(max)(t)"; thus as a function of time (t) and both for real power and reactive power P, Q - respective parameters are abbreviated with New-P_G,B(max)(t) and New-Q_G,B(max)(t) respectively. These parameters can be taken as a specific form of the parameters New-P_G,B(setpoint)(t), New-Q_G,B(setpoint)(t) as mentioned before.

Based thereon as input from the power-dispatch module MOD3, 130 a decision request is made in step 40 whether a backup asset 200.N for generating power is available.

In the affirmative ("YES"-Path), the updated new max-point is accepted as setpoint for a given hybrid electrical-power-generating asset 200.n as shown in step 41a, in particular also for a faulty hybrid electrical-power-generating asset 200.f.

Thus, even a faulty power-generating asset 200.f can be operated with an updated or new maximum power setpoint of real power P, i.e. with a setpoint New-P_G,B(setpoint)(t) for setting an upper limit for operation and/or as operation point aiming for maximum power P(max) for the faulty power-generating asset 200.f or any other given power-generating asset 200.n; this is depicted in FIG. 4 in this variant for the case that a backup power generation is available.

In the non-affirmative ("NO"-Path), i.e. when no backup power generation is available, the health-based-maintenance unit 140.2 provides for a health-based-maintenance strategy that uses further the estimated parameters of remaining useful life RUL provided by the limitation-estimation module MOD2, 120 as input; the remaining useful life RUL is given for both the genset G and the battery storage B - this is as depicted in FIG. 4 as $G_{RUL}$ and $B_{RUL}$.

As follow-up in step 41b, a fault mitigation and optimization operation is executed. As follow-up, in a further step 42b a difference value is determined upon a comparison of an intial reactive power setpoint/maximum in its initial value and its above mentioned new value. Based on that difference an updated value for a real power setpoint is determined.

Further, based thereon in step 43b as follow-up, the given power-generation asset 200.n, in particular the faulty power-generation asset 200.f is operated with the updated value for a real power setpoint in order to maintain the health-index-parameter HI as long as possible. This means, in other words, at best operation of a hybrid electrical-power system 200 even with a faulty power-generation asset 200.f is established until the next following regular maintenance interval endpoint of time with less stress and thus overall elongated life time. Thereby, a health-based-maintenance operation of even a faulty power-generation asset 200.f is provided and triggered in the case that no backup power generation is available with using the parameters of remaining useful life RUL for the genset G and the battery storage B as received from the limitation-estimation module MOD2, 120.

Turning to the details of FIG. 5, the interplay of the power-dispatch module MOD3, 130 is shown therein, co-acting with the power-limitation-estimation module MOD2, 120 and the health-based-maintenance module MOD4, 140.

As best shown therein, the power-dispatch module MOD3, 130 provides at firsts a tertiary controller 130.3 for a two-level-optimization; thus being configured as two-level optimizer.

In a first step 30a based on a load information 108 a forecast algorithm provides a load forecast to a Level-1 scheduler in step 31a - the Level-1 scheduler herein is established to operate for a long horizon health-constrained optimization in step 32a. The long horizon health-constrained optimization uses both the load forecast provided by the Level-1 scheduler and an updated, respectively new real power maximum setpoint New-P_G,B(max)(t) respectively for the genset G and/or the battery storage B delivered by the aforementioned limitation-estimation module MOD2, 120 as explained hereinbefore. The new reactive power maximum setpoint New-Q_G,B(max)(t) for the genset G and/or the battery storage B delivered by the aforementioned limitation-estimation module MOD2, 120 as explained hereinbefore will be used otherwise.

Thus, as follow-up, in a first result an updated Level-1 power setpoint can be provided for both the genset G and the battery storage B -now labeled as New-P_G,B(setpoint)(t)-- to a Level-2 dispatcher as best seen in the sequence of operation step 33a of FIG. 5. Also, the Level-2 dispatcher receives a load indication. Still, however, in this case, the Level-2 dispatcher receives a load indication in real-time; this is a real-time load indicator for further processing the updated respectively new power setpoint delivered by the Level-1 scheduler.

In other words, the Level-2 dispatcher combines the long horizon health-constrained optimization value with a real-time load indicator.

As further seen at best in the embodiment of the power-dispatch module MOD3, 130 of FIG. 5, the controller of the power-dispatch module MOD3, 130 thus works with a two-level optimizer having a tertiary controller of a third control unit 130.3 and a secondary controller of a second control unit 130.2. The secondary controller of the second control unit 130.2 aims to provide the new power setpoint --more precisely a new real power setpoint New-P_G,B(setpoint)-- to the primary controller 130.1 ECU for providing the operation control setting 134 but also to the health-based-maintenance module MOD4, 140. This is depicted with step 33b and the module MOD4 in FIG. 5. The speed bias of the primary mover of the genset G and the voltage bias of the battery storage is set accordingly in step 33b and the further control is taken by the primary controller 130.1; in this case the a primary controller is formed as an engine control unit ECU. The engine control unit ECU as the primary controller provides the aforementioned operation-control setting 134 to the given hybrid electrical-power-generating asset 200.n.

Still nevertheless as seen in secondary controller of a second control unit 130.2 of FIG. 5 the aforementioned new reactive power setpoint New-Q_G,B(setpoint) for the genset G and/or the battery storage B is a result of the max-value New-Q_G,B(max)(t) delivered by the aforementioned limitation-estimation module MOD2,120 to a reactive capability curve as seen in step 31b and the above mentioned new real power setpoint New-P_G,B(setpoint)(t) filtered with a dynamic load flow as seen in step 32b.

Thus, from the third power-dispatch controller unit 130.3 --as a tertiary controller or third power-dispatch unit-- the aforementioned long horizon real power setpoint and real-time updated real power setpoint, hereinafter referred to as "New-$P_{G,B,L2}$(setpoint)", is provided to the second power-dispatch unit, namely a secondary controller 130.2. Therein it is combined with a transient updated reactive power maximum value New-Q_G,B(max)(t); said updated reactive power maximum transient value is also delivered by the limitation-estimation module MOD2, 120 as has been discussed before.

Said updated reactive-power maximum value is provided in comparison with said reactive capability curve and based thereon combined with an operation determining a dynamic load flow calculation based on said updated Level-2 active power setpoint.

As a result, also an updated reactive power setpoint of a Level-2 is provided and both the Level-2 active-power setpoint and Level-2 reactive-power setpoint "New-$Q_{G, B, L2}$ (setpoint)" for both the genset and battery storage G, B is provided. Both, the new power level two update "New-$P_{G, B,L2}$(setpoint)" and " New-$Q_{G, B,L2}$ (setpoint)" is given to a speed bias and voltage bias unit as best shown in step 33b of the embodiment of the power-dispatch module MOD3, 130 in FIG. 5.

As a result, the sequence of synergetic operation of the tertiary controller 130.3 and the secondary controller 130.2 is producing a speed bias for the genset G and voltage bias for the battery storage is based on a Level-2 updated active and reactive-power setpoint P, Q as shown in FIG. 5. Thus, in the end the primary controller 130.1 as e.g. the engine control unit ECU and automatic voltage regulator unit is optimized to drive a given asset, in particular a faulty asset as explained before.

In the embodiment of FIG. 6, a scheme is given to explain the general operation of the health-status-estimation module MOD1, 110 as shown in general form in the embodiment of controller 100 in FIG. 3. Therein, the health-status-estimation unit 110.1 for generating data is indicated with a sensor in the form of a fault indicator provided in a knowledge-based tool or data bank as a fault characteristics knowledge 110.2 to provide life datasets of a given asset 200.n, respectively faulty asset 200.f. Obtaining said health-index-parameter HI can be done by a real-time provision unit 110.3 as shown in the embodiment of the health-status-estimation module MOD1 of FIG. 3.

FIG. 6 shows the details of in particular the first health-status-estimation unit 110.1 and further the second health-status-estimation unit 110.2. The health-status-estimation unit 110.1 for generating data can be provided with a live data set as shown in step 11 in the embodiment of FIG. 6.

Further therein, an operation is provided in step 12a1 to normalize the THD value at the POR acccording to the IEEE standard 519,2014. As a result thereof, an unbalance factor is given for calculation of a fault indicator weightage factor from step 12a2; e.g. this can be operated for any given asset 200.n or a faulty asset 200.f as discussed before. The weightage factor herein is depicted as $\alpha_n$.

Further based on the life data set from health-status-estimation unit 110.1 and the fault indicator weightage factor $\alpha_n$ of the health-status-estimation unit 110.2 in step 13a a normalized value of fault indicator x can be calculated online in a third health-status-estimation unit 110.3. Further, the health-status-estimation unit 110.3 may use threshold values for healthy and faulty cases and certain health index and health ranges for proper active and reactive-power settings from the knowledge-based health-status-estimation unit 110.2 as best seen from steps 12B and 12c of the health-status-estimation unit 110.2 in FIG. 6.

In the online third health-status estimation unit 110.3, thus, from the fault indicator x in step 13a and the threshold in step 13c an index HI and power ranges P,Q can be generated as seen in the output interface of health-status-estimation unit 110.3 of health-status-estimation module MOD1, 110 for being provided to the limitation-estimation module MOD2, 120. As only shown in the embodiment of FIG. 6 for the threshold also an active and reactive power P, Q recommendation can be given in step 13c to the limitation-estimation module MOD2, 120 with $P_G$ and $Q_G$ shown in the lower part of FIG. 6.

As an example to compute a genset health index $G_{HI}$ and a battery storage health index $B_{HI}$ can be provided based on the fault characteristics of the respective equipment which herein after is outlined with reference to the genset G.

For instance, the various faults considered in a generator are a bearing fault which encompasses the cause and effect of both static eccentricity SE and dynamic eccentricity DE. The prominent engine fault considered is a cylinder misfiring and incipient winding degradation of turn-to-turn short circuit TTSC which is a fault in a generator to be considered.

The genset health index $G_{HI}$ then is at best a weighted function of the respective faults in the generator and the internal combustion engine.

A fault weightage beta ($\beta n$) is established based on the error fault loss in the machine

$$G_{HI} = 1 - [\beta_1 f_1(SE) + \beta_2 f_2(DE) + \beta_3 f_3(Bearing) + \beta_4 f_4(Engine) + \beta_5 f_5(TTSC))]$$

Where,

$$f_1(SE) = f_1(f_s); f_2(DE) = f_2(f_s); f_3(Bearing) = f_3(f_s); f_4(Engine) = f_4(ncm); f_5(TTSC) = f_5(f_s, wdf)$$

The SE, DE Bearing and TTSC fault are a function of respective fault severity (fs).

TTSC is further a function of winding degradation factor (wdf) which is established as fault factor.

The fault engine is function of number of cylinder misfiring (ncm).

Further with regard to the battery storage B, the various possible faults in a battery considered are external short circuit ES, internal short circuit IS and thermal runaway TRA.

The battery-health-index $B_{HI}$ then is calculated as a weighted function of the respective faults as well as the battery healthy condition as it varies with different state of charge SOC.

The fault weightage γn then can be established based on the state of charge SOC weightage and end of discharge F factor (this is the number of cycles will reduce based on the fault).

$$B_{HI} = 1 - [\gamma_1 f_1(Healthy) + \gamma_2 f_2(ES) + \gamma_3 f_3(IS) + \gamma_4 f_4(TRA)]$$

Where,

$$f_n(condition) = f_n(f_s, DOD, T\_diff)$$

As indicated with regard to the health-status-estimation unit 110.3 in an online health-index estimator the health index HI can be estimated based on fault loss error in the generator and based on a knowledge-based system as indicated with the second health-status-estimation unit 110.2.

Similarly for the battery storage it is established as fault characteristics knowledge based system.

The engine fault is estimated based on a vibration signal.

Similarly, this is executed for the generator and the battery storage, G, B based on a combination of a knowledge-based and online based system of units 110.2, 110.3 and of course based on data measured or given by means of fault indicators as exemplified with regard to the first health-status-estimation unit 110.1 herein before. For instance, an engine fault can be estimated based on a vibration signal.

FIG. 7(a) and FIG. 7(b) show a background for the relationship between G_HI, B_HI and P_G,B(diff), _G,B(diff) as operated within the limitation-estimation module MOD2 - the curve show the normalized change or error value for the power values. The relationship between health index and the power difference are established based on Finite Element Method (FEM) simulation. The various faults possible faults in generator and battery are modelled; and run for the fault characteristic factors for the respective fault cases.

Based on the simulation result for the corresponding fault characteristics, a real power difference P(diff), a reactive power difference Q(diff) are obtained for an asset 200.n or faulty asset 200.f.

$$P(diff) = 1 - \left(\frac{healthy - faulty}{healthy}\right); Q(diff) = 1 - \left(\frac{healthy - faulty}{healthy}\right)$$

In addition, fault loss difference L(diff) in generator for various fault are obtained to establish the weightage factor βn and for battery, the end-of-discharge (F) factor is recorded. The end-of-discharge factor is multiplied with the real power P_F(diff), an reactive power Q_F(diff ) as the number of discharge cycle will eventually reduce based on a fault.

Further, a background of the RUL relationship with the HI of the asset as operated on MOD2 is understood from FIG. 7. Since the health index HI is established based on fault characteristics, the time to failure value RUL can be used as a knowledge system simulated by accelerated life cycling testing for various possible components.

The alarm system MOD5 provides a real-time information about the health index of the component and updated RUL based on a health strategy, which will be useful for maintenance and to reconfigure the system strategy for critical mission application.

As understood further from FIG. 7 a real power normalized value as provided from limitation-estimation module MOD2 and is multiplied with the operating value to update the maximum possible limit of the an asset 200.n or faulty asset 200.f. Similarly, the corresponding normalized reactive power maximum limit is updated in the reactive capability curve. With the updated maximum limits of an asset 200.n or faulty asset 200.f, the new reat and reactive power set points are obtained as explained with FIG. 5.

As further shown in FIG. 8(a) and FIG. 8(b) the relative cost change as a function of genset health index G_HI and battery storage health index G_BI proves that the health of a component or asset changes the operation cost of the system.

$$Relative\ cost\ change = \frac{Health\ constrained\ dispatch}{Without\ health\ constrained\ dispatch}$$

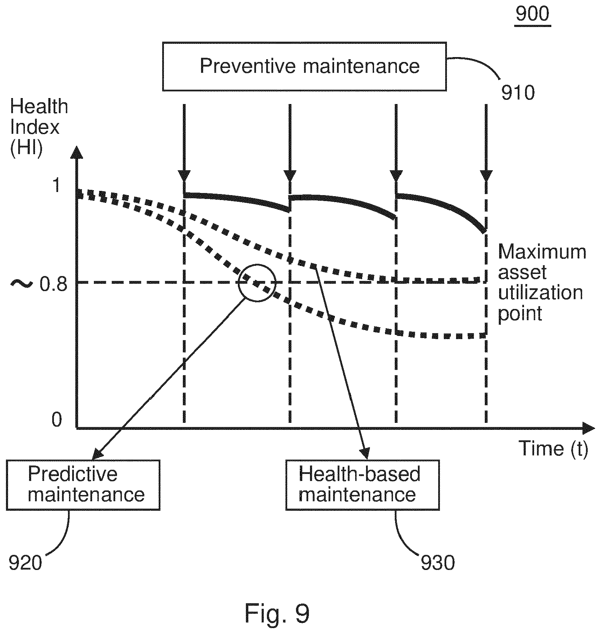

FIG. 9 elucidates a background for the advantages of use of the Health-based maintenance module MOD4. The new power set point based on health based control strategy; namely as delivered from power-dispatch module MOD3 is given input to a RUL knowledge based system. The RUL knowledge is updated an maintenance strategy is processed.

A comparison with different strategies in contemporary use is shown in FIG. 9, which is shown as related to a true health index HI over operation time (t); namely: "preventive maintenance" 910, which can be assumed to be essentially based on a fixed time interval; "predictive maintenance" 920, which can be assumed to be essentially based on a maximum asset utilization point; "health-based maintenance" 930, which can be assumed to be essentially based on a maintenance scheme that is scheduled after the mission is accomplished by reconfiguring the asset based on health using condition based control strategy. The latter as can be seen from FIG. 9 has advantages for full utilization of an asset 200.n, 200.f as mentioned above; a cost reduction and last but not least no further stress is imposed on a faulty asset 200.f. The "preventive maintenance" 910 achieves to stick close to the max-HI, but needs constantly repeated and costly maintenance effort. The "health-based maintenance" 930 achieves to near the maximum asset utilization point at about at 0.8 of the max-HI on the long run. The "predictive maintenance" 920 achieves to hold this only on the short term operation time.

Thus, salient features of the invention can bre summarized as:

- Real-time estimation of components health index HI based on fault characteristics from a health-status-estimation module MOD1 and for remaining useful life RUL
- Based on health of component, update of maximum real power limit (MOD 3, tertiary controller) and reactive capability curve maximum limit (MOD 3, secondary controller)
- Health-assisted. real and reactive power set point for the primary controller (MOD3)
- Health based maintenance strategy by a health-based-maintenance module MOD4 and monitor module MOD5

It has been shown that the concept of the invention is different from existing technologies in that:

- a real-time components health index (HI) estimation and time to failure (RUL) is provided
- a maximum limit updating of real power and reactive power based on health index is possible
- a cost change, when the stress on the asset is reduced based on maximum power limit change is achieved

Potential applications are microgrids - in particular microgrids in or for land-based load applications or marine vessel or other applications or flight or other air or aerospace load applications. As to the feasibility, the health- assisted strategy can be used in a microgrid controller as a knowledge system and using an analytical engine to update the power limits and the patch power base on the health of the component. As well it is possible to reconfigure the control strategy for critical mission application like in marine and aerospace.

LIST OF REFERENCE SIGNS

| | |
|---|---|
| 1000 | microgrid |
| 200 | hybrid electrical-power system of assets 200.1....200.N |
| 200.1....200.N 200.n, 200.f | hybrid electrical-power asset, given or faulty |
| 300 | load |
| G | genset |
| B | battery storage |
| RUL | remaining useful life (RUL) |
| HI | Health index |

Q(diff)   reactive power difference
P(diff)   real power difference


210   electrical-power lines
220   signal lines
221   up-link signal line
222   down-link signal line
223   load signal line


102   condition information input interface
104   condition information
108   load information
112   Health-status information
114   timeproposal information
116   power-provision information
134   operation control setting
132   control output interface


110, MOD1   health-status-estimation module
120, MOD2   limitation-estimation module
130, MOD3   power-dispatch module
140, MOD4   health-based-maintenance module
150, MOD5   monitor module


**Claims**

1.  A controller (100) for a number of components of a hybrid electrical-power system (200) of a hybrid microgrid, in particular for the hybrid electrical-power system (200) with the number of components, wherein a component is a hybrid electrical-power-generating asset (200.n) for providing electrical power for use in the hybrid microgrid, wherein the hybrid electrical-power-generating asset (200.1, 200.2, 200.N) comprises a genset and an electrical power storage,
    in particular for providing electrical power to a load interface respectively to a load (300) connectable to the load interface of the hybrid electrical-power system (200) within the microgrid,
    wherein the controller (100) comprises:

    - a condition-information input interface (102) for receiving condition-information (104) indicative of an or a number of fault-related aspects of the hybrid electrical-power-generating asset (200.1, 200.2. 200.N);
    - a health-status-estimation module (MOD1, 110) that receives the condition-information (104) and is configured, using the condition-information (104), to determine and provide health-status information (112) for the given hybrid electrical-power-generating asset (200.1, 200.2, 200.N), which is indicative of a current operative condition of the given hybrid electrical-power-generating asset (200.n);is proposed
    in particular wherein the given hybrid electrical-power-generating asset (200.n) is a faulty hybrid electrical-power-generating asset (200.f) indicative of a faulty operative condition;
    - a limitation-estimation module (MOD2, 120) that receives the determined health-status information (112) and is configured, using the health-status information (112), to determine and provide power-provision information (116) indicative of a current limitation of a provision of power of the given hybrid electrical-power-generating asset (200.n) due to its current operative condition; and
    - a power-dispatch module (MOD3, 130) that receives the power-provision information (116) and/or load information (108) indicative of a magnitude of a load (300) of the hybrid electrical-power system (200) and is configured, using the power-provision information (116) and/or the load information (108), to determine and provide an operation-control setting (134) to the given hybrid electrical-power-generating asset (200.n).

2.  The controller of claim 1, wherein the operation-control setting (134) is provided to the given hybrid electrical-power-generating asset (200.n) and

    - at least the given hybrid electrical-power-generating asset (200.n) is operated according to the current operative-condition-related limitations, and/or

- the components of the hybrid electrical-power system (200) with the number of electrical-power-generating assets (200.1, 200.2, 200.N) are operated such that sufficient electrical power (210) is provided to the load (300).

3. The controller of claim 1 or 2, wherein the health-status information (112) for a given hybrid electrical-power-generating asset (200.n) is in the form of a health-index-parameter (HI), the health-index-parameter (HI) being estimated by means of a calculatory basis, using a number of fault characteristic parameters assigned to a number of fault-related aspects of the given hybrid electrical-power-generating asset (200.n), in particular faulty hybrid electrical-power-generating asset (200.f).

4. The controller according to any of the preceding claims, wherein the hybrid electrical-power-generating asset (200.1, 200.2, 200.N) comprises:

   - the genset as a combination of a primary mover, preferably an internal combustion engine, and an electrical power generator, and
   - the electrical power storage as a battery storage,

   and/or

   - the health-status information (112), in particular health-index-parameter (HI), for a given hybrid electrical-power-generating asset (200.n) comprises genset health-status information and power storage health-status information.

5. The controller according to any of the preceding claims, wherein the given hybrid electrical-power-generating asset (200.n) is labelled as a faulty hybrid electrical-power-generating asset in that the current operative condition of the given hybrid electrical-power-generating asset (200.n) is subject to an identified faulty operative condition, in particular in that a decision to label a faulty hybrid electrical-power-generating asset (200.n) is based on one or more pre-determined faulty operative conditions.

6. The controller according to any of the preceding claims, wherein

   - the limitation-estimation module (MOD2, 120) is configured, using the health-status information (112), in particular the health-index parameter (HI), to determine a timeproposal information (114) indicative of a remaining useful life (RUL) of the given electrical-power-providing asset (200.n).

7. The controller according to any of the preceding claims, wherein

   - a health-based-maintenance module (140, MOD4) receives the timeproposal information (114) from the knowledge based module, in particular the limitation-estimation module (MOD2, 120), and the operation-control parameters from the power-dispatch module (MOD3, 130).

8. The controller according to any of the preceding claims, wherein a health-based-maintenance module (140, MOD4) is configured to

   - determine an optimal time for maintenance of the given electrical-power-providing asset (200.n) and/or
   - to operate the given hybrid electrical-power-generating asset (200.1, 200.2, 200.N) with the operation-control setting (134) until to a given time for maintenance of the given electrical-power-providing asset (200.n), and/or
   - update a power setting and/or difference of setting based on the operation-control setting (134) or the like fault helps,

   in particular wherein the given hybrid electrical-power-generating asset (200.n) is labelled as a faulty hybrid electrical-power-generating asset in that the current operative condition of the given hybrid electrical-power-generating asset (200.1, 200.2, 200.N) is subject to an identified faulty operative condition.

9. The controller according to any of the preceding claims, wherein

   - the limitation-estimation module (MOD2, 120) is configured to determine current-power-provision information (116) that comprises active-power-provision information and reactive-power-provision information indicative of a current constitution-related limitation of the provision of active power and reactive power by the genset, respectively.

10. The controller according to any of the preceding claims, wherein

- the power-dispatch module (MOD3, 130) is configured to determine and provide setting-power-provision information (116) as an active-power setpoint and a reactive-power setpoint as part of the operation-control parameters for the at least one genset, wherein the setting-power-provision information (116) are indicative of a target value, in particular the active-power setpoint and the reactive-power setpoint are indicative of a target value for an active power and a target value for a reactive power to be produced by the genset, respectively,

and/or

- the power-dispatch module comprises a memory unit for storing reactive-power-allocation information that allocates to a value of the active power a value of the reactive power that the genset is capable of providing, and
- the power-dispatch module is configured to determine the reactive power setpoint using the determined active-power setpoint and the reactive-power-allocation information.

11. The controller according to any of the preceding claims, wherein

- the health-status-estimation module (MOD1, 110) comprises a memory unit for storing health-index-model information comprising fault-severity-allocation information that allocate, for each fault-related aspect of the given electrical-power-providing asset, a value of the sensor data to a fault-severity index, and
- for determining the health-status information, the health-status-estimation module (MOD1, 110) is configured to determine a total sum of the fault-severity index for all fault-related aspects of the given hybrid electrical-power-generating asset using the sensor data and the fault-severity-allocation information.

12. The controller according to any of the preceding claims, wherein

- the health-index-model information comprises aspect-weight-allocation information that allocate a weight to each fault-related aspect of the given hybrid electrical-power-generating asset indicative of how strongly a given fault-related aspect influences the operative condition of the given electrical-power-generating asset, and
- the health-status-estimation module (MOD1, 110) is configured to determine the total sum in form of a weighted total sum by weighting the fault-severity index of each fault-related aspect by a respective allocated weight given by the aspect-weight-allocation information.

13. The controller according to any of the preceding claims, wherein

- the number of fault-related aspects of an electrical-power-generating asset, that has a genset, comprises at least one out of the group of fault-related aspects consisting of:

    - a static eccentricity of a bearing and a dynamic eccentricity of the bearing of the electrical-power generator,
    - cylinder misfirings of an engine of the prime mover, and a winding degradation of windings of the electrical-power generator,

and/or
- the number of fault-related aspects of an electrical-power-generating asset, that has a battery storage, comprises at least one out of the group of fault-related aspects consisting of:
internal short circuit and external short circuit of a battery of the battery storage, and thermal runaway of the battery storage.

14. The controller according to any of the preceding claims, comprising:

- a monitor module (150, MOD5) adapted for receiving and monitoring, in particular providing and/or alarming, a health-status information (112) and/or a timeproposal information indicative of a remaining useful life (RUL) of the given electrical-power-providing asset.

15. Hybrid electrical-power system (200) for a hybrid microgrid, with a number of components, wherein a component is a hybrid electrical-power-generating asset (200.1, 200.2. 200.N) for providing electrical power for use in the hybrid microgrid, and a controller according to any of the preceding claims,

in particular wherein the controller according to any of the preceding claims is adapted to control electrical power to a load interface respectively to a load (300) connectable to the load interface of the hybrid electrical-power system (200) within the hybrid microgrid, in particular wherein the load (300) is connectable to the load interface of the hybrid electrical-power-generating asset (200.1, 200.2. 200.N) and in particular also to the controller.

Fig. 1

Fig. 2

**Fig. 3**

100

MOD3 130

Power dispatch module 130.0 200

108 200.n 200.f

134

116.2 New $P_{G,B,L2}$ (set point)

116.1 $P_{G,B}^{(diff)}(t), Q_{G,B}^{(diff)}(t)$ 116

RUL relationship with the HI of the componet 120.2

$G_{HI}, B_{HI}$ vs. $G_{RUL}, B_{RUL}$

Limit estimate 120

$G_{RUL}, B_{RUL}$ 114.1

114

$G_{RUL\_H}, B_{RUL\_H}$ 114.2

MOD4 Health-based maintenance module or health control modul

140.1 RUL update based on health condition strategy

140 Health-based maintenance 140.2

140.3 Trigger maintenance

$G_{HI}, B_{HI}$ vs. $P_{G,B}^{(diff)}, Q_{G,B}^{(diff)}$

Relationship between health index and maximum power deviation 120.1

MOD2 112.1

112.2

112 $G_{HI}, B_{HI}$ 112.3

110 $G_{HI}, B_{HI}$

MOD5 150 Health status of Genset and battery with RUL 150.0

$G_{HI}, RUL\_H, B_{HI}, RUL\_H$

Alarm module

MOD1 110.3 Obtain HI based on fault characteristics real-time

110.1 110.2 Fault characteristics knowledge

Sensor data/Measurement

HEALTH BASED
MAINTENANCE MODULE
OR HEALTH CONTROL
MODULE

┌─────────┐
┊  MOD2   ┊ 120
└─────────┘

┌─────────┐
┊  MOD3   ┊ 130
└─────────┘

140

New $P_{G,B}^{max}(t)$

$G_{RUL}, B_{RUL}$

New $Q_{G,B}^{max}(t)$

40

Back-up
generation
available

No ──────

41b

Fault mitigation and
optimization

Yes 41a

New $P_{G,B}^{max}(t)$ to the
faulty asset

42b

Injecting $\left( \text{Init } Q_{G,B}^{max}(t) - \text{New } Q_{G,B}^{max}(t) \right)$

43b

Maintain HI
and mission
accomplishment

MOD4

Fig. 4

Fig. 5

Power dispatch module

Tertiary controller

Two-level optimizer

130.3

Level-1 Scheduler

Long horizon health-constrained optimization

31a — Load forecast

32a — New $P_{G,B}^{max}(t)$

30a — Forecast algorithm

108

Level-2 Dispatcher

New $P_{G,B,L1}$(set point)

New $P_{G,B,L1}$

33a

Load real time

120 — $P_{G,B}^{(diff)}(t)$, $Q_{G,B}^{(diff)}(t)$  MOD2

110 — 2. Knowledge based module  MOD1

930 — Health-based control strategy

MOD3

Load real time

New $Q_{G,B}^{max}(t)$

New $P_{G,B,L2}$(set point)

Secondary controller

130.2

Dynamic load flow

New $Q_{G,B,L2}$(set point)

Reactive capability curve

32b

31b

Speed bias and voltage bias

33b

Primary controller

130.1

ECU and AVR

134

Components/Assets

200.n, 200.f

MOD4 — Health-based maintenance module

140

MOD5

150

130

Fig. 6

$$P(\text{diff}) = 1 - \left( \frac{\text{healthy-faulty}}{\text{healthy}} \right) \; ; \; Q(\text{diff}) = 1 - \left( \frac{\text{healthy-faulty}}{\text{healthy}} \right)$$

Genset health index

Battery health index

(a)

(b)

Fig. 7

$$\text{Relative cost change} = \frac{\text{Health constrained dispatch}}{\text{Without health constrained dispatch}}$$

(a)

(b)

Fig. 8

EP 4 329 149 A1

Fig. 9

Europäisches
Patentamt

European
Patent Office

Office européen
des brevets

# EUROPEAN SEARCH REPORT

Application Number

EP 22 19 2477

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | EP 3 654 482 A1 (SIEMENS AG [DE]) 20 May 2020 (2020-05-20) * paragraphs [0023] – [0062]; figures 1,2 * | 1-15 | INV. H02J13/00 H02J3/00 |
| X | EP 3 876 378 A1 (CATERPILLAR INC [US]) 8 September 2021 (2021-09-08) * paragraphs [0035] – [0144]; figure 1 * | 1-15 | |
| A | US 2019/302711 A1 (NETI PRABHAKAR [US] ET AL) 3 October 2019 (2019-10-03) * paragraph [0079]; figure 1 * | 1-15 | |
| X | EP 3 098 927 A1 (AES CORP [US]) 30 November 2016 (2016-11-30) * paragraphs [0009] – [0056]; figure 4 * | 1-15 | |

TECHNICAL FIELDS
SEARCHED        (IPC)

H02J

The present search report has been drawn up for all claims

| Place of search | Date of completion of the search | Examiner |
|---|---|---|
| Munich | 16 February 2023 | Grosse, Philippe |

EPO FORM 1503 03.82 (P04C01)

## ANNEX TO THE EUROPEAN SEARCH REPORT
## ON EUROPEAN PATENT APPLICATION NO.

EP 22 19 2477

This annex lists the patent family members relating to the patent documents cited in the above-mentioned European search report.
The members are as contained in the European Patent Office EDP file on
The European Patent Office is in no way liable for these particulars which are merely given for the purpose of information.

16-02-2023

| Patent document cited in search report | | Publication date | Patent family member(s) | | Publication date |
|---|---|---|---|---|---|
| EP 3654482 | A1 | 20-05-2020 | AU 2019257360 | A1 | 28-05-2020 |
| | | | EP 3654482 | A1 | 20-05-2020 |
| | | | ES 2897488 | T3 | 01-03-2022 |
| | | | US 2020153274 | A1 | 14-05-2020 |
| EP 3876378 | A1 | 08-09-2021 | AU 2021201097 | A1 | 23-09-2021 |
| | | | CN 113364062 | A | 07-09-2021 |
| | | | EP 3876378 | A1 | 08-09-2021 |
| | | | US 2021281077 | A1 | 09-09-2021 |
| US 2019302711 | A1 | 03-10-2019 | NONE | | |
| EP 3098927 | A1 | 30-11-2016 | BR 102016011934 | A2 | 27-12-2016 |
| | | | CL 2016001259 | A1 | 23-12-2016 |
| | | | CN 106208367 | A | 07-12-2016 |
| | | | DK 3098927 | T3 | 08-06-2020 |
| | | | EP 3098927 | A1 | 30-11-2016 |
| | | | ES 2791961 | T3 | 06-11-2020 |
| | | | HU E050820 | T2 | 28-01-2021 |
| | | | KR 20160138925 | A | 06-12-2016 |
| | | | PH 12016000207 | A1 | 05-02-2018 |
| | | | PL 3098927 | T3 | 07-09-2020 |
| | | | RU 2016120358 | A | 30-11-2017 |
| | | | US 2016352144 | A1 | 01-12-2016 |

EPO FORM P0459

For more details about this annex : see Official Journal of the European Patent Office, No. 12/82

**EP 4 329 149 A1**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 9229437 A
- US 8126685 A
- US 8010250 B2